# FASCICULE DE BREVET EUROPEEN

(11) **EP 4 489 983 B1**
(45) Date de publication et mention de la délivrance du brevet: **18.03.2026**
(21) Numéro de dépôt: 23710285.0
(22) Date de dépôt: 07.03.2023
(51) Int. Cl.: B60K 37/00, B62D 25/14, B60H 1/00, B60H 1/24, B60K 35/50, B60K 37/20, B64D 11/00, B64D 13/00, B64D 43/00

(54) **PLANCHE DE BORD COMPRENANT UNE VEINE DE VENTILATION**
ARMATURENBRETT MIT LÜFTUNGSKANAL
DASHBOARD WITH A VENTILATION DUCT

(30) Priorité: 11.03.2022 FR 2202139
(43) Date de publication de la demande: 15.01.2025
(73) Titulaire: Airbus Atlantic, 17300 Rochefort (FR)
(72) Inventeur: ANDRIEU, Gilles, 31140 MONTBERON (FR); FALGUERA, Stéphane, 31700 BLAGNAC (FR)
(74) Mandataire: Argyma
(86) Numéro de dépôt international: PCT/EP2023/055730
(87) Numéro de publication internationale: WO 2023/170055

(56) Documents cités:
- DE-B3- 102007 014 406
- FR-A1- 2 964 084
- FR-A1- 3 089 891

## Description

### Domaine technique

La présente invention concerne le domaine des structures secondaires d'un aéronef et concerne plus précisément une planche de bord d'un poste de pilotage d'un avion.

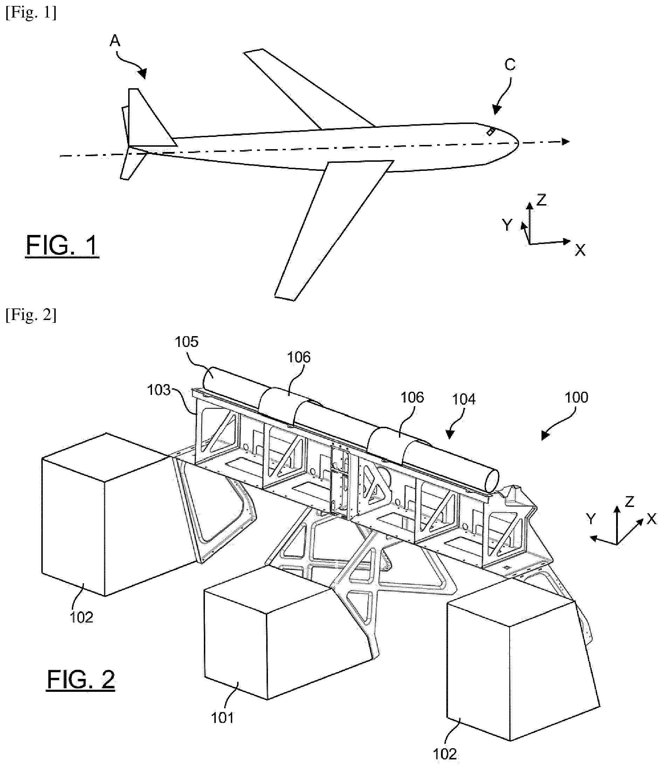

En référence à la [Fig.1], à titre d'exemple, un avion A s'étend longitudinalement selon un axe X, latéralement selon un axe Y et verticalement selon un axe Z de manière à former un repère orthogonal (X, Y, Z). Dans un tel repère, l'avant et l'arrière sont définis selon l'axe X en référence au déplacement de l'avion A en vol. Autrement dit, l'avant et l'arrière de l'avion A sont définis selon l'axe X sur la [Fig.1] qui est orienté de l'arrière vers l'avant. De plus, dans un tel repère, le terme « transversal » définit un objet s'étendant suivant la largeur de l'avion A dans le plan (Y, Z). L'avion A comprend une cabine de pilotage C, montée à l'avant de l'avion A et dans laquelle est installé un poste de pilotage 100 (représenté sur la [Fig.2]) pour piloter l'avion A.

De manière connue, un poste de pilotage 100 d'avion A, monté dans la cabine de pilotage C, comprend une pluralité de meubles intérieurs permettant de recevoir les différents équipements nécessaires au pilotage de l'avion, tels que des écrans de contrôle et des dispositifs de commande de vol.

Plus précisément, en référence à la [Fig.2], le poste de pilotage 100 comprend, de manière connue, un pylône central 101, disposé entre les deux sièges destinés au pilote et au co-pilote de l'avion A et comprenant généralement le levier de contrôle moteur, deux consoles latérales 102, disposées de part et d'autre du poste de pilotage 100 et accessibles chacune par le pilote ou le co-pilote, et une planche de bord 103, s'étendant sensiblement transversalement à l'avant du poste de pilotage 100. Une telle planche de bord 103 est notamment configurée pour présenter au pilote et au co-pilote les différents écrans d'affichage des données relatives à la navigation.

Selon l'état de l'art, une planche de bord 103 est un assemblage de pièces et de panneaux métalliques, généralement assemblés par rivetage ou au moyen de boulons. Une telle structure métallique présente l'inconvénient d'être lourde et complexe à manipuler. On connait également du document FR3089891A1 une planche de bord en matériau composite, comprenant une structure principale d'un seul tenant présentant une forme concave pour recevoir une pluralité d'écrans de contrôle.

Cependant, étant donné que la planche de bord 103 reçoit des équipements tels que des écrans de contrôle et des dispositifs de commande de vol, il est nécessaire de les refroidir pour éviter tout risque de surchauffe. A ce titre, il est connu de monter un système de ventilation 104 sur la planche de bord 103, comme représenté sur la [Fig.2] . Le système de ventilation 104 comprend de manière connue un conduit 105 dans lequel circule un flux d'air et une pluralité d'organes de support 106, reliés à la planche de bord 103, pour maintenir le conduit 105. Le conduit 105 s'étend le long de la planche de bord 103 sur une surface supérieure et comprend des orifices de passage pour l'émission de flux d'air dans la planche de bord 103 afin de refroidir les équipements. Les organes de support 106 sont reliés à la planche de bord 103 et permettent à la fois de maintenir le conduit 105 en position et de fixer l'ensemble des systèmes électriques, par exemple les câbles d'alimentation des équipements montés dans la planche de bord 103 ou bien encore les câbles de liaison à un ordinateur de bord. Des panneaux d'habillage sont également ajoutés pour des besoins esthétiques.

Cependant, dans une telle configuration, le conduit 105 rapporté et les organes de support 106 présentent une masse importante, qui doit être supportée par la planche de bord 103. Une telle masse induit des efforts importants dans la planche de bord 103 et dans les fixations que la lient à la cabine de pilotage C, ce qui présente un inconvénient important. De plus, l'ensemble des pièces rapportées pour le système de ventilation 104 augmente de manière importante le nombre de pièces à assembler dans la cabine de pilotage C, ce qui augmente la complexité, les coûts et les durées d'installation du poste de pilotage P dans le cockpit.

L'invention vise ainsi à éliminer au moins certains de ces inconvénients en proposant une planche de bord et un système de ventilation simple et rapide à installer dans un poste de pilotage. L'invention vise en particulier un ensemble d'une planche de bord et d'un système de ventilation qui participe à la tenue mécanique de l'ensemble, sans que le système de ventilation ne représente une charge supplémentaire à supporter.

### PRESENTATION DE L'INVENTION

L'invention concerne une planche de bord configurée pour être montée dans un poste de pilotage d'un aéronef, ladite planche de bord comprenant :
• une structure principale, s'étendant longitudinalement et présentant une forme concave, la structure principale étant configurée pour recevoir une pluralité d'équipements de commande et/ou de contrôle de navigation, la structure principale comprenant une face supérieure.

La planche de bord est remarquable en ce qu'elle comprend un capot supérieur s'étendant longitudinalement selon la longueur de la structure principale, le capot supérieur étant relié mécaniquement à la structure principale et monté sur la face supérieure de la structure principale, de manière à définir une veine de circulation d'un flux d'air entre la face supérieure de la structure principale et le capot supérieur, la face supérieure comprenant une pluralité d'orifices, configurés pour permettre la circulation du flux d'air à l'intérieur de la structure principale.

La planche de bord selon l'invention permet avantageusement de s'affranchir de l'ajout d'un conduit rapporté de ventilation qui ajoute de la masse et induit des efforts importants dans la planche de bord et dans le poste de pilotage.

Le capot supérieur permet également de rigidifier la structure complète de la planche de bord qui doit supporter des équipements lourds. Grâce au capot supérieur relié mécaniquement à la structure principale, l'ensemble contribue à la tenue mécanique de la planche de bord et permet de la solidifier. A la différence de l'art antérieur, dans lequel la structure principale devait supporter un conduit rapporté, le capot supérieur permet de renforcer la structure principale et d'améliorer sa résistance mécanique. Le capot supérieur remplit ainsi une première fonction de ventilation et une deuxième fonction de rigidification.

La planche de bord selon l'invention permet également, de manière avantageuse, de minimiser le nombre de pièces dans le poste de pilotage, ce qui permet à la fois de faciliter l'installation de la planche de bord dans le poste de pilotage et de limiter les temps d'installation. Des temps d'installation réduits permettent d'augmenter les cadences sur les lignes de production, permettant ainsi de limiter les coûts et les délais.

Dans une forme de réalisation, la structure principale étant formée dans un matériau composite, le capot supérieur est formé d'un seul tenant dans ledit matériau composite. Un tel matériau permet la formation d'un capot supérieur robuste et léger, qui permet de limiter la masse globale de la planche de bord et donc de limiter les efforts dans les fixations qui la lient à la structure de l'aéronef dans lequel elle est montée. Une structure principale et un capot supérieur formés dans un même matériau permet de s'assurer que les deux parties de la planche de bord présentent un même comportement et des caractéristiques mécaniques et thermiques similaires.

De manière préférée, le capot supérieur est fixé à la structure principale par « coconsolidation » ou par collage à froid dudit matériau composite, permettant de s'affranchir de fixations rapportées, de type vis ou insert par exemple, qui peuvent fragiliser les liaisons et ajoutent de la masse. Par le terme « coconsolidation », on entend une méthode de soudage par chauffage local longitudinal d'une ou des deux parties de la planche de bord.

Dans une première forme de réalisation, le capot supérieur définit une unique veine de circulation d'un flux d'air entre la face supérieure de la structure principale et le capot supérieur.

Dans une deuxième forme de réalisation, le capot supérieur définissant au moins deux veines d'air discontinues, la planche de bord comprend un organe de liaison, en saillie du capot supérieur, configuré pour assurer une continuité du flux d'air entre les veines d'air. Un tel organe de liaison permet le montage du capot supérieur sur une structure principale dans laquelle est monté un équipement spécifique faisant obstacle à la veine continue, connu et généralement monté dans une planche de bord d'un aéronef. La continuité du flux d'air dans toute la veine de la planche de bord est ainsi avantageusement assurée.

De préférence, la face supérieure de la structure principale présente une forme concave. Cela permet d'augmenter le volume intérieur de la veine pour augmenter le flux d'air circulant dans la veine. Le flux d'air traversant la veine est alors suffisamment important pour refroidir l'ensemble des équipements montés dans la structure principale.

L'invention concerne également un poste de pilotage comprenant une planche de bord telle que décrite précédemment.

L'invention porte en outre sur un aéronef comprenant un poste de pilotage tel que décrit précédemment.

Enfin, l'invention concerne un procédé de fabrication de la planche de bord telle que décrite précédemment, ledit procédé comprend :
- une étape de formation du capot supérieur d'un seul tenant par thermoformage d'une plaque de matériau composite, et
- une étape de fixation du capot supérieur sur la face supérieure de la structure principale, de manière à former une veine intérieure de circulation d'un flux d'air.

De préférence, dans l'étape de fixation, le capot supérieur est fixé sur la face supérieure de la structure principale par « coconsolidation » ou collage du matériau composite.

De manière préférée, le procédé comprend une étape de formation de la structure principale de forme concave d'un seul tenant par thermoformage d'une plaque de matériau composite.

De préférence, le matériau composite utilisé pour la formation de la structure principale est compatible en termes d'assemblage avec le matériau composite utilisé pour la formation du capot supérieur.

De préférence encore, le matériau composite utilisé pour la formation de la structure principale et le matériau composite utilisé pour la formation du capot supérieur sont identiques.

Dans une forme de réalisation, le capot supérieur est formé d'un seul tenant par estampage.

### PRESENTATION DES FIGURES

L'invention sera mieux comprise à la lecture de la description qui va suivre, donnée à titre d'exemple, et se référant aux figures suivantes, données à titre d'exemples non limitatifs, dans lesquelles des références identiques sont données à des objets semblables.
La [Fig.1] est une représentation schématique d'un aéronef comprenant une cabine de pilotage, dans laquelle est monté un poste de pilotage.
La [Fig.2] est une représentation schématique d'un poste de pilotage comprenant une planche de bord et un système de ventilation selon l'art antérieur.
La [Fig.3] est une représentation schématique d'un poste de pilotage comprenant une planche de bord selon une forme de réalisation de l'invention.
La [Fig.4] est une représentation schématique depuis l'arrière de la planche de bord de la [Fig.3].
La [Fig.5] est une représentation schématique depuis l'avant de la planche de bord de la [Fig.3].
La [Fig.6] est une représentation schématique en éclaté de la planche de bord de la [Fig.3].

Il faut noter que les figures exposent l'invention de manière détaillée pour mettre en œuvre l'invention, lesdites figures pouvant bien entendu servir à mieux définir l'invention le cas échéant.

### DESCRIPTION DETAILLEE DE L'INVENTION

L'invention concerne une planche de bord, destinée à être montée dans une cabine de pilotage d'un aéronef. Ce document présente l'exemple d'un montage dans un avion, cependant il va de soi que la planche de bord pourrait tout aussi bien être montée dans tout type d'aéronef.

En référence à la [Fig.1], il est représenté un avion A s'étendant longitudinalement selon un axe X orienté d'arrière en avant, latéralement selon un axe Y orienté de la droite vers la gauche et verticalement selon un axe Z orienté du bas vers le haut de manière à former un repère orthogonal (X, Y, Z). Dans un tel repère, le terme « horizontal » définit un objet s'étendant dans le plan (X, Y) et le terme « transversal », un objet s'étendant dans le plan (Y, Z).

De manière connue, l'avion A comporte à l'avant une cabine de pilotage C, délimitant la portion de fuselage située à l'avant de l'avion A et dans laquelle se trouve le pilote et le co-pilote. La cabine de pilotage C comporte une ossature structurelle configurée pour recevoir un poste de pilotage P.

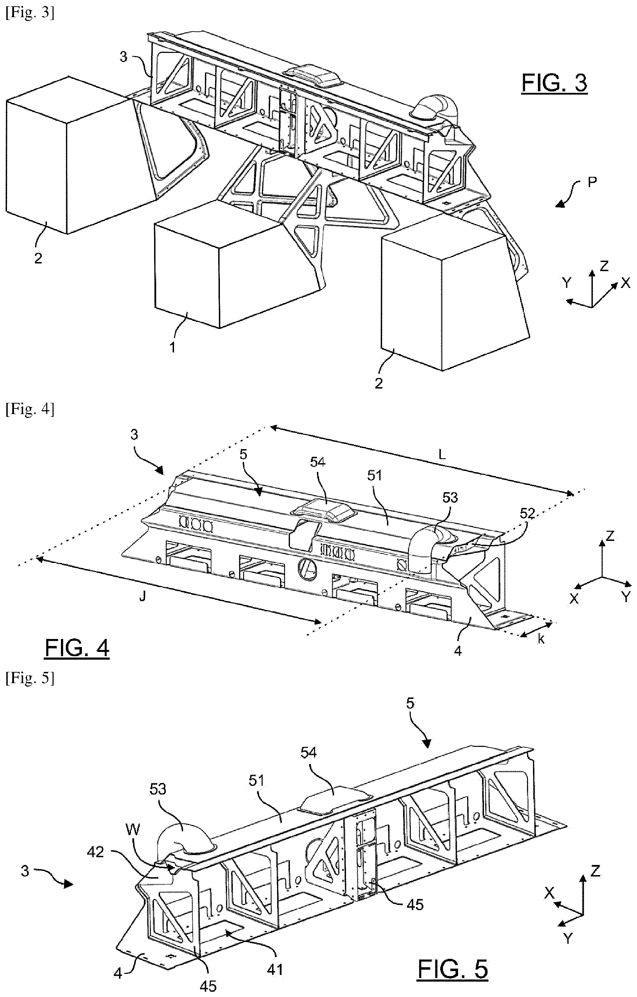

De manière connue, en référence à la [Fig.3], un poste de pilotage P, monté dans la cabine de pilotage C, comprend une pluralité de meubles intérieurs permettant de recevoir les différents équipements nécessaires au pilotage de l'avion A, tels que des écrans de contrôle et des dispositifs de commande de vol. En particulier, le poste de pilotage P comprend, de manière connue, un pylône central 1, disposé entre les deux sièges destinés au pilote et au co-pilote de l'avion A, deux consoles latérales 2, disposées de part et d'autre du poste de pilotage P, et une planche de bord 3 configurée pour présenter au pilote et au co-pilote les différents écrans d'affichage des données relatives à la navigation.

La planche de bord 3 s'étend sensiblement transversalement à l'avant du poste de pilotage P. Autrement dit, la longueur de la planche de bord 3 s'étend dans la largeur de l'avion A, suivant l'axe Y de manière à présenter au pilote et au co-pilote un ensemble d'équipements, tels que des dispositifs de commande et/ou de contrôle de vol, par exemple une pluralité de dispositifs d'affichage. Dans la suite de ce document, l'avant de la planche de bord 3 définit la face en vis-à-vis du pilote et du co-pilote en vol, c'est-à-dire la face de la planche de bord 3 orientée vers l'arrière de la cabine de pilotage C dans l'avion A. Autrement dit, l'avant et l'arrière de la planche de bord 3 sont inversés par rapport à l'avant et l'arrière du poste de pilotage P.

En référence aux figures 4 à 6, la planche de bord 3 selon l'invention comprend une structure principale 4 et un capot supérieur 5 de fermeture.

La structure principale 4 présente une forme concave définissant une concavité 41 (représentée sur la [Fig.5]). La structure principale 4 est configurée pour recevoir la pluralité d'équipements de commande et/ou de contrôle de navigation, tels que des écrans d'affichage par exemple. Autrement dit, dans le plan (X, Z) formé dans le repère (X, Y, Z), la concavité 41 présente sensiblement en coupe la forme d'un C, fermé à l'arrière de la planche de bord 3 et ouvert vers l'avant de la planche de bord 3, c'est-à-dire vers l'arrière du poste de pilotage P, de manière à ce que les équipements puissent faire face au pilote et au co-pilote.

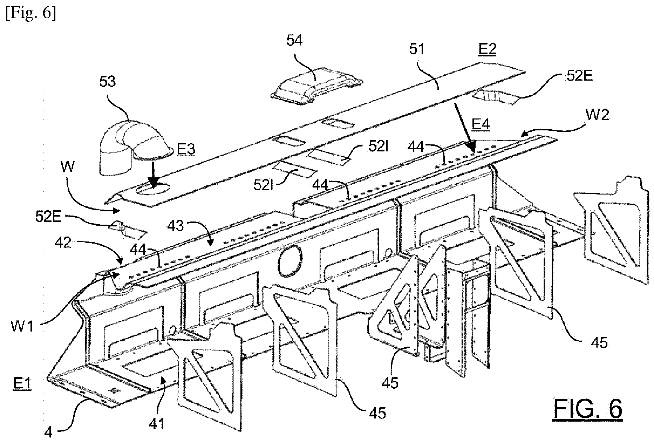

La structure principale 4 comprend une face supérieure 42 (représentée plus précisément sur la [Fig.6]). De préférence la face supérieure 42 présente une forme concave. Plus précisément, dans cet exemple, la face supérieure 42 comprend une gorge 43, présentant une forme en V qui permet la circulation du flux d'air. De préférence, la face supérieure 42 (plus précisément la gorge 43) comprend une pluralité d'orifices 44, configurés pour permettre la circulation du flux d'air à l'intérieur de la structure principale 4.

La structure principale 4 s'étend longitudinalement suivant l'axe latéral Y et présente, dans cet exemple, une longueur L proportionnelle à la longueur de la cabine de pilotage C dans laquelle la planche de bord 3 est destinée à être montée. De même, la profondeur k de la concavité 41, c'est-à-dire la dimension suivant l'axe X, peut varier suivant les équipements destinés à être montés dans la structure principale 4.

De manière préférée, la structure principale 4 est monobloc, c'est à dire formée d'un seul tenant, de manière à limiter les jonctions entre plusieurs pièces rapportées, permettant ainsi avantageusement de renforcer la planche de bord 3.

De préférence, la structure principale 4 est formée dans un matériau composite. De préférence encore, la structure principale 4 est fabriquée dans un matériau polymère thermoplastique (de type fibres de verre par exemple), permettant la fabrication d'une planche de bord 3 à la fois légère et robuste. Selon une forme de réalisation préférée de l'invention, une telle structure principale 4 est rigidifiée par des cloisons assemblées par l'injection de matériau thermoplastique dans un moule. Il va de soi que la structure principale 4 pourrait être fabriquée dans un matériau différent, en particulier dans tout matériau métallique ou composite.

En référence à la [Fig.5], la structure principale 4 comprend une pluralité de cloisons internes 45, configurées pour délimiter une pluralité de logements, destinés à recevoir la pluralité d'équipements intégrant des fonctions de tenue ou non. Chaque cloison 45 s'étend longitudinalement selon l'axe X, pour délimiter la pluralité de logements successivement transversalement suivant l'axe Y. Chaque cloison 45 permet également d'apporter à la planche de bord 3 de la raideur transversale et en torsion autour de l'axe Y.

Toujours en référence aux figures 4 à 6, le capot supérieur 5 selon l'invention s'étend longitudinalement selon la longueur de la structure principale 4, c'est-à-dire selon l'axe Y. De préférence, le capot supérieur 5 présente une longueur J sensiblement comparable à la longueur de la structure principale 4. De préférence encore, la longueur J du capot supérieur 5 est légèrement inférieure à la longueur L de la structure principale 4. Une telle longueur J permet avantageusement au capot supérieur 5 de pouvoir être monté sur tout type de planche de bord existante.

Le capot supérieur 5 définit avec la structure principale 4, une veine W de circulation d'un flux d'air pour le refroidissement des équipements montés dans la structure principale 4.

Dans une forme de réalisation, en référence à la [Fig.6], le capot supérieur 5 comprend une paroi supérieure 51, présentant de préférence une forme concave, de manière à augmenter le volume intérieur de la veine W. Le capot supérieur 5 comprend également deux parois latérales extérieures 52E qui délimitent latéralement la veine W de circulation. Dans cet exemple, le capot supérieur 5 comprend en outre deux parois latérales intérieures 52I qui permettent de délimiter deux veines W1, W2 discontinues (représentées sur la [Fig.6]). Il va de soi que le capot supérieur 5 pourrait comprendre un nombre différent de parois latérales intérieures 52I, en particulier un nombre supérieur à deux, pour délimiter un nombre de veines W discontinues supérieur à deux. De même il va de soi que le capot supérieur 5 pourrait être exempt de paroi latérale intérieure 52I de manière à définir une unique veine W de circulation d'un flux d'air.

Le capot supérieur 5 comprend également un conduit d'entrée 53, permettant l'alimentation en air et l'introduction du flux d'air dans la veine W.

Dans une forme de réalisation, le capot supérieur 5 comprend un organe de liaison 54, en saillie supérieure du capot supérieur 5, qui relie les deux veines W1, W2 discontinues de part et d'autre des parois latérales intérieures 52I, de manière à assurer une continuité du flux d'air. L'organe de liaison 54 permet de contourner un équipement qui présenterait une hauteur importante, communément intégré dans la concavité 41 au milieu de la longueur L de la structure principale 4. Ainsi le flux d'air peut circuler dans l'ensemble de la veine W.

De manière préférée, le capot supérieur 5 est monté sur la face supérieure 42 de la structure principale 4 de manière à définir la veine W de circulation du flux d'air entre la face supérieure 42 de la structure principale 4 et le capot supérieur 5, comme représenté sur la [Fig.5]. La veine W étant directement formée dans la planche de bord 3, il n'est pas nécessaire d'ajouter un conduit supplémentaire, qui ajouterait de la masse et induirait des efforts supplémentaires importants dans la planche de bord 3.

De préférence, le capot supérieur 5 est fixé à la structure principale 4 pour permettre au capot supérieur 5 de renforcer la planche de bord 3 et de participer à sa tenue mécanique. Autrement dit, grâce au capot supérieur 5, la planche de bord 3 est plus robuste et résiste à des efforts plus importants.

Dans une forme de réalisation préférée, le capot supérieur 5 est formé d'un seul tenant, pour limiter les fixations entre différentes pièces. Un capot supérieur 5 d'un seul tenant permet de limiter l'apparition de zones faibles dans la structure, c'est à dire de zones pouvant présenter des concentrations de contraintes ou des efforts plus importants par exemple.

De préférence, le capot supérieur 5 est formé dans un matériau composite. De préférence encore, le capot supérieur 5 est fabriqué dans un matériau polymère thermoplastique (de type fibres de verre par exemple), permettant la fabrication d'un capot supérieur 5 à la fois léger et robuste. De préférence, le capot supérieur 5 est fabriqué dans un matériau composite compatible en termes d'assemblage (par « coconsolidation » ou collage) avec le matériau de la structure principale 4. De préférence encore, le capot supérieur 5 est fabriqué dans le même matériau composite que la planche de bord 3, de manière à faciliter leur solidarisation tout en s'assurant que la planche de bord 3 et le capot supérieur 5 présentent des caractéristiques similaires qui leur permettent de se déformer par exemple de manière semblable. Selon une forme de réalisation préférée de l'invention, un tel capot supérieur 5 est fabriqué par estampage ou thermoformage de matériau thermoplastique dans un moule. Il va de soi que le capot supérieur 5 pourrait être fabriqué dans un matériau différent, en particulier dans un matériau métallique.

Dans une forme de réalisation, le capot supérieur 5 est fixé à la structure principale 4 par « coconsolidation » du matériau composite, c'est-à-dire par une méthode de soudage par chauffage local. Un tel assemblage permet de s'affranchir de dispositifs de fixation, de type vis ou insert par exemple, permettant à la fois d'alléger la planche de bord 3, de s'affranchir de jeux de montage entre plusieurs pièces et de limiter les contraintes dues à des efforts de liaison par exemple. Une telle fixation du capot supérieur 5 permet également d'assurer une fabrication et un montage simple et rapide, permettant de limiter les coûts de production. Dans le cas d'un capot supérieur 5 et d'une structure principale 4 dans un matériau métallique, le capot supérieur 5 peut par exemple être soudé à la structure principale 4, de manière à limiter les fixations.

De manière alternative, le capot supérieur 5 peut être fixé à la structure principale 4 par collage. Il va de soi que le capot supérieur 5 peut également être fixé à la structure principale 4 par assemblage au moyen de fixations.

De préférence, la veine W présente un volume intérieur permettant un volume d'air suffisant pour refroidir l'ensemble des équipements montés dans la concavité 41 de la structure principale 4.

Il va dorénavant être décrit, en référence à la [Fig.6], un procédé de fabrication d'une planche de bord 3 selon un mode de mise en œuvre préféré de l'invention. Dans cet exemple, la structure principale 4 et le capot supérieur 5 sont réalisés dans un matériau composite, de manière à former une planche de bord 3 légère et robuste.

Le procédé comprend tout d'abord une étape de formation E1 de la structure principale 4, de préférence d'un seul tenant par thermoformage d'une plaque de matériau composite. De préférence encore, la structure principale 4 est formée par estampage. La formation de la structure principale 4 permet de former à la fois une concavité 41 pour recevoir les équipements et une gorge 43 sur la face supérieure 42 pour la formation de la veine W, comme cela sera décrit plus en détails par la suite.

Le procédé comprend ensuite une étape de formation E2 de la paroi supérieure 51 du capot supérieur 5 d'un seul tenant par thermoformage d'une plaque de matériau composite. De préférence encore, le capot supérieur 5 est formé par estampage. Dans cette étape, de préférence, chaque paroi latérale 52, le conduit d'entrée 53 et l'organe de déviation 54 sont également formés.

Chaque paroi latérale 52, le conduit d'entrée 53 et l'organe de déviation 54 sont ensuite successivement fixés, dans une troisième étape E3, à la paroi supérieure 51. De préférence, chaque paroi latérale 52, le conduit d'entrée 53 et l'organe de déviation 54 sont fixés par un procédé d'assemblage sans fixation (par exemple collage, soudage, ...) de manière à la fois à alléger la planche de bord 3, à s'affranchir de jeux de montage entre plusieurs pièces et à limiter les contraintes dues à des efforts de liaison par exemple. Le montage est ainsi simple et rapide.

Le procédé comprend ensuite une étape de fixation E4 du capot supérieur 5 sur la face supérieure 42 de la structure principale 4 de manière à former la veine W intérieure de circulation d'un flux d'air entre la gorge 43 et le capot supérieur 5. De préférence, le capot supérieur 5 est fixé par « coconsolidation » de matériau composite. La planche de bord 3 est dépourvue de dispositif de fixation, de type vis ou insert par exemple, ce qui permet une planche de bord 3 d'un seul tenant légère et robuste et permet de limiter les jeux de montage.

La planche de bord 3 ainsi formée d'un seul tenant comprend une veine W pour la circulation d'un flux d'air pour refroidir les équipements montés dans la concavité 41 de la structure principale 4. Il n'est ainsi pas nécessaire d'ajouter un conduit supplémentaire qui ajouterait de la masse et entrainerait des efforts supplémentaires comme cela était le cas dans l'art antérieur. Il n'est pas non plus nécessaire, grâce à l'invention, d'ajouter des fixations pour le maintien des systèmes électriques, comme les câbles d'alimentation des équipements montés dans la planche de bord par exemple ou bien les câbles de liaison à un ordinateur de bord, ce qui représente un gain de masse important.

De plus, une telle planche de bord 3 d'un seul tenant intégrant directement la fonction de ventilation ainsi que des fonctions électriques permet de limiter les durées d'installation de la planche de bord 3 dans le poste de pilotage P, ce qui permet avantageusement d'augmenter les cadences sur les lignes d'assemblage d'aéronef.

## Revendications

1. Planche de bord (3) configurée pour être montée dans un poste de pilotage (P) d'un aéronef, ladite planche de bord (3) comprenant :
• une structure principale (4), s'étendant longitudinalement et présentant une forme concave, la structure principale (4) étant configurée pour recevoir une pluralité d'équipements de commande et/ou de contrôle de navigation, la structure principale (4) comprenant une face supérieure (42),
• la planche de bord (3) étant **caractérisée en ce qu'**elle comprend un capot supérieur (5) s'étendant longitudinalement selon la longueur de la structure principale (4), le capot supérieur (5) étant relié mécaniquement à la structure principale (4) et monté sur la face supérieure (42) de la structure principale (4), de manière à définir une veine (W) de circulation d'un flux d'air entre la face supérieure (42) de la structure principale (4) et le capot supérieur (5), la face supérieure (42) comprenant une pluralité d'orifices (44) configurés pour permettre la circulation du flux d'air à l'intérieur de la structure principale (4).

2. Planche de bord (3) selon la revendication 1, dans laquelle, la structure principale (4) étant formée dans un matériau composite, le capot supérieur (5) est formé d'un seul tenant dans ledit matériau composite.

3. Planche de bord (3) selon la revendication 2, dans laquelle le capot supérieur (5) est fixé à la structure principale (4) par « coconsolidation » ou collage dudit matériau composite.

4. Planche de bord (3) selon l'une des revendications 1 à 3, dans laquelle le capot supérieur (5) définissant au moins deux veines (W1, W2) d'air discontinues, la planche de bord (3) comprend un organe de liaison (54), en saillie du capot supérieur (5), configuré pour assurer une continuité du flux d'air entre les veines (W1, W2) d'air.

5. Planche de bord (3) selon l'une des revendications 1 à 4, dans laquelle la face supérieure (42) de la structure principale (4) présente une forme concave.

6. Poste de pilotage (P) comprenant une planche de bord (3) selon l'une des revendications 1 à 5.

7. Aéronef comprenant un poste de pilotage (P) selon la revendication 6.

8. Procédé de fabrication d'une planche de bord (3) selon l'une des revendications 1 à 5, ledit procédé comprend :
• une étape de formation (E2) du capot supérieur (5) d'un seul tenant par thermoformage d'une plaque de matériau composite, et
• une étape de fixation (E4) du capot supérieur (5) sur la face supérieure (42) de la structure principale (4), de manière à former une veine (W) intérieure de circulation d'un flux d'air.

9. Procédé de fabrication de la planche de bord (3) selon la revendication 8, ledit procédé comprenant une étape de formation (E1) de la structure principale (4) de forme concave d'un seul tenant par thermoformage d'une plaque de matériau composite.

10. Procédé de fabrication de la planche de bord (3) selon l'une des revendications 8 et 9, dans lequel le capot supérieur (5) est formé d'un seul tenant par estampage.

## Patentansprüche

1. Instrumententafel (3), die für den Einbau in ein Cockpit (P) eines Flugzeugs ausgelegt ist, wobei die Instrumententafel (3) umfasst:
• eine Hauptstruktur (4), die sich längs erstreckt und eine konkave Form aufweist, wobei die Hauptstruktur (4) zur Aufnahme einer Vielzahl von Navigations-Steuer- und/oder Kontrollausrüstungen ausgelegt ist, wobei die Hauptstruktur (4) eine Oberseite (42) umfasst,
• wobei die Instrumententafel (3) **dadurch gekennzeichnet ist, dass** sie eine obere Abdeckung (5) umfasst, die sich längs gemäß der Länge der Hauptstruktur (4) erstreckt, wobei die obere Abdeckung (5) mechanisch mit der Hauptstruktur (4) verbunden ist und auf der Oberseite (42) der Hauptstruktur (4) montiert ist, um einen Zirkulationskanal (W) für einen Luftstrom zwischen der Oberseite (42) der Hauptstruktur (4) und der oberen Abdeckung (5) zu definieren, wobei die Oberseite (42) eine Vielzahl von Öffnungen (44) umfasst, die ausgelegt sind, um die Zirkulation eines Luftstroms im Inneren der Hauptstruktur (4) zu erlauben.

2. Instrumententafel (3) nach Anspruch 1, wobei die Hauptstruktur (4) aus einem Verbundwerkstoff gebildet ist, wobei die obere Abdeckung (5) einstückig aus dem Verbundwerkstoff gebildet ist.

3. Instrumententafel (3) nach Anspruch 2, wobei die obere Abdeckung (5) durch "Kokonsolidierung" oder Verkleben des Verbundmaterials an der Hauptstruktur (4) befestigt ist.

4. Instrumententafel (3) nach einem der Ansprüche 1 bis 3, wobei die obere Abdeckung (5) mindestens zwei diskontinuierliche Luftkanäle (W1, W2) definiert, wobei die Instrumententafel (3) ein Verbindungselement (54) umfasst, das aus der oberen Abdeckung (5) herausragt, das ausgelegt ist, um eine Kontinuität des Luftstroms zwischen den Luftkanälen (W1, W2) zu gewährleisten.

5. Instrumententafel (3) nach einem der Ansprüche 1 bis 4, wobei die Oberseite (42) der Hauptstruktur (4) eine konkave Form aufweist.

6. Cockpit (P), umfassend eine Instrumententafel (3) nach einem der Ansprüche 1 bis 5.

7. Flugzeug, umfassend ein Cockpit (P) nach Anspruch 6.

8. Verfahren zur Herstellung einer Instrumententafel (3) nach einem der Ansprüche 1 bis 5, wobei das Verfahren umfasst:
• einen Schritt des Bildens (E2) der oberen Abdeckung (5) einstückig durch Thermoformen einer Verbundwerkstoffplatte, und
• einen Schritt des Befestigens (E4) der oberen Abdeckung (5) an der Oberseite (42) der Hauptstruktur (4), um einen inneren Zirkulationskanal (W) für einen Luftstrom zu bilden.

9. Verfahren zur Herstellung der Instrumententafel (3) nach Anspruch 8, wobei das Verfahren einen Schritt des Bildens (E1) der konkaven Hauptstruktur (4) einstückig durch Thermoformen einer Verbundmaterialplatte umfasst.

10. Verfahren zur Herstellung der Instrumententafel (3) nach einem der Ansprüche 8 und 9, wobei die obere Abdeckung (5) einstückig durch Stanzen gebildet wird.

## Claims

1. Instrument panel (3) configured to be mounted in a flight deck (P) of an aircraft, said instrument panel (3) comprising:
- a main structure (4), extending longitudinally and having a concave shape, the main structure (4) being configured to receive a plurality of navigation command and/or control equipment, the main structure (4) comprising an upper face (42),
- the instrument panel (3) being **characterized in that** it comprises an upper cover (5) extending longitudinally along the length of the main structure (4), the upper cover (5) being mechanically connected to the main structure (4) and mounted on the upper face (42) of the main structure (4), so as to define a duct (W) for circulation of an air flow between the upper face (42) of the main structure (4) and the upper cover (5), the upper face (42) comprising a plurality of orifices (44) configured to allow the circulation of the air flow within the main structure (4).

2. Instrument panel (3) according to claim 1, wherein, the main structure (4) being formed from a composite material, the upper cover (5) is formed in one-piece from said composite material.

3. Instrument panel (3) according to claim 2, wherein the upper cover (5) is fastened to the main structure (4) by "co-consolidation" or bonding of said composite material.

4. Instrument panel (3) according to one of claims 1 to 3, wherein the upper cover (5) defining at least two discontinuous air ducts (W1, W2), the instrument panel (3) comprises a connecting member (54), projecting from the upper cover (5), configured to ensure a continuity of the air flow between the air ducts (W1, W2),

5. Instrument panel (3) according to one of claims 1 to 4, wherein the upper face (42) of the main structure (4) has a concave shape.

6. Flight deck (P) comprising an instrument panel (3) according to one of claims 1 to 5.

7. Aircraft comprising a flight deck (P) according to claim 6.

8. Method for manufacturing an instrument panel (3) according to one of claims 1 to 5, said method comprises:
- a step of forming (E2) the upper cover (5) in one-piece by thermoforming a plate of composite material, and
- a step of fastening (E4) the upper cover (5) to the upper face (42) of the main structure (4), so as to form an inner duct (W) for circulation of an air flow.

9. Method for manufacturing the instrument panel (3) according to claim 8, said method comprising a step of formation (E1) of the main concave shaped structure (4) in one-piece by thermoforming a plate of composite material.

10. Method for manufacturing the instrument panel (3) according to one of claims 8 and 9, wherein the upper cover (5) is formed in one-piece by stamping.
